# EUROPEAN PATENT APPLICATION

(11) **EP 4 113 380 A1**
(43) Date of publication of application: **04.01.2023**
(21) Application number: 21182890.0
(22) Date of filing: 30.06.2021
(51) Int. Cl.: G06N 3/04, G06N 3/08, G05D 1/02

(54) **DEVICE AND METHOD FOR CLASSIFYING A SIGNAL AND/OR FOR PERFORMING REGRESSION ANALYSIS ON A SIGNAL**

(71) Applicant: Robert Bosch GmbH, 70442 Stuttgart (DE)
(72) Inventor: Adel-Vu, Heike, 70565 Stuttgart (DE); Vu, Ngoc Thang, 70565 Stuttgart (DE); Schuff, Hendrik, 71229 Leonberg (DE)

(57) **Abstract**

Computer-implemented method for determining an output signal characterizing a classification and/or a regression result of an input signal comprising the steps of:
a. Determining a feature representation characterizing the input signal;
b. Determining an intermediate signal characterizing a classification and/or regression result of the feature representation;
c. Predicting, based on the feature representation and the intermediate signal, a deviation of the intermediate signal from a desired output signal of the input signal;
d. Adapting the intermediate signal according to the determined deviation thereby determining an adapted signal;
e. Providing the adapted signal as output signal.

## Description

### Technical background

The invention concerns a method for determining a classification and/or regression result for an input signal, a method for training a machine learning system, a machine learning system, a device for training the machine learning system, a computer program, and a computer-readable storage medium.

### Prior art

Hastie et al. 2009 "10. Boosting and Additive Trees" in The Elements of Statistical Learning discloses a method for boosted classification.

### Background of the invention

The use of machine learning systems for classification and/or regression analysis has become ubiquitous in a variety of technical fields. Especially for robotic applications, machine learning systems are used heavily to, e.g., infer knowledge from sensor data of the surroundings of a respective robot. Here, especially neural networks are widely applied as they constitute the state-of-the-art with respect to prediction performance.

A major drawback in most machine learning systems and neural networks in particular is that they determine wrong predictions for a provided input yet still output high confidences in their predictions. This is, of course, highly undesirable as one would like a machine learning system to be correct if it is confident it its own prediction and unconfident of it if its prediction is wrong.

### Disclosure of the invention

Given this background, the invention concerns a computer-implemented method for determining an output signal characterizing a classification and/or a regression result of an input signal comprising the steps of:
a. Determining a feature representation characterizing the input signal;
b. Determining an intermediate signal characterizing a classification and/or regression result of the feature representation;
c. Predicting, based on the feature representation and the intermediate signal, a deviation of the intermediate signal from a desired output signal of the input signal;
d. Adapting the intermediate signal according to the determined deviation thereby determining an adapted signal;
e. Providing the adapted signal as output signal.

The feature representation, the intermediate signal and the deviation are preferably each determined by a machine learning system. The method may hence be understood as a method for predicting a classification and/or regression result for the input signal, wherein the prediction is self-corrected. That means that the method corrects incorrect predictions automatically before the prediction is actually put out as the output signal.

The input signal is a technical signal. It may preferably characterize data obtained from a sensor. The sensor may, for example, be an optical sensor, e.g., a camera sensor, a radar sensor, a LIDAR, an ultrasonic, or a thermal camera. The data obtained from these exemplary sensors may all be considered images. It is also possible that the input signal characterize data from an audio sensor such as a microphone. It is also possible that the input signal characterizes data obtained from a piezo sensor, a temperature sensor or a sensor for measuring pressure. In particular, the input signal may also characterize data from different types of sensors or and/or multiple data from a single sensor type (e.g., two images form a stereo camera sensor). The method may hence be understood as a method performed by a virtual sensor, i.e., a method for detecting content in a sensor signal that cannot be derived directly from the sensor data itself.
The output signal may characterize a classification and/or a regression result of the input signal. The term regression result may be understood as a result from a method for performing regression analysis. In other words, while a method for classification is understood as outputting discrete data (e.g., class labels), a regression result is a continuous value characterizing the input signal. The term classification is understood to comprise different types of classifications. For example, object detection, semantic segmentation, multi-label classification and multi-class classification are all understood to fall under the more general term classification. The output signal may also characterize both a regression result and a classification, e.g., in form of an object detection wherein the method classifies whether an object is present in a certain part of an image and wherein the method further performs a regression with respect to the size of the object (e.g., size of the object in the image or in the real world).

The intermediate signal may be understood as a signal which could possibly be used as output signal also but may be corrected in the method before being put out as output signal.

The output signal may especially be used for controlling an actuator. For example, the output signal may serve as basis for determining a control signal of a robot comprising the actuator. The input signal may, for example, characterize a surrounding of the robot and the control signal may be determined such that the robot interacts with its environment suitably. For example, the input signal may characterize an image of the surroundings of the robot and the output signal may characterize the presence and/or locations of objects in the environment. The control signal may then be determined such that the robot moves to a desired position without colliding with the objects.

The advantage of the proposed method is that the classification and/or the regression result characterized by the output signal is corrected such that it matches a desired output signal more closely, i.e., the quality of the output signal is improved. Especially when using machine learning systems to determine the output signal, the machine learning signal may output an output signal which is inaccurate with respect to a desired output signal while the machine learning system is nevertheless confident that it provided an accurate output signal.

In preferred embodiments, the feature representation is determined by a first machine learning system using the input signal as input of the first machine learning system and that the intermediate signal is determined by a second machine learning system using the feature representation as input of the second machine learning system and that the deviation is determined by a third machine learning system using the feature representation and the intermediate signal as input of the third machine learning system. The first, second and third machine learning system may be understood as parts of a fourth machine learning system, i.e., a machine learning system that comprises the first, second and third machine learning system.

The feature representation may be understood as a preferably high-dimensional encoding of the input signal. Preferably, the first neural network is used for determining the feature representation. In this case, the feature representation may be the output of a layer, preferably a hidden layer, of the first neural network when provided the input signal as input. The feature representation may be a vector or may be reshaped into a vector. In case of the feature vector being a vector, the second machine learning model and/or third machine learning model may especially be a multilayer perceptron respectively.

Preferably, the first, second and third machine learning system are each neural networks. The inventors found that the output signal is most accurate when using neural networks for the first, second and third machine learning system.

The deviation may, for example, characterize a metric or semimetric (e.g., the cosine similarity) between the intermediate signal and the desired output signal. For example, the intermediate signal and the desired output signal may each be in the form of a vector and the deviation may be the Euclidean distance or Manhattan distance between the two vectors. It should be noted here that the desired output signal is not required in the method, as is common when determining classifications and/or regression results. The prediction of the deviation is not dependent on the presence of the desired output signal, i.e., a ground truth of the input signal. The desired output signal can rather be understood as an implicit property of an input signal. For example, an image showing objects may be understood as implicitly containing information about the location and extent of the objects.
While for, e.g., training a machine learning system, the desired output signal could be required, this is not the case for the proposed method for predicting the output signal.
The deviation may also characterize a probability of the intermediate signal being accurate enough with respect to the desired output signal. For example, a distance between an intermediate signal and a desired output signal can be defined, wherein the distance characterizes a maximum distance for which the intermediate signal is still accurate enough with respect to the desired output signal. The deviation predicted in the method may then characterize a probability of the intermediate signal being within this maximum distance to the desired output signal.

In preferred embodiments, the steps c. and d. are repeated iteratively until an exit criterion is fulfilled, wherein the adapted signal is used as intermediate signal in a next iteration.
In other words, the steps c. and d. may be run in a loop until the exit criterion is fulfilled. The exit criterion may, for example, characterize a predefined maximum number of executed iterations and/or the deviation characterizing a difference of the intermediate signal and output signal that is less than or equal to a predefined threshold.

The inventors found that iteratively adapting the intermediate representation leads to an even bigger increase in accuracy of the output signal. As an additional technical effect, the inventors found that when using an exit criterion characterizing the deviation characterizing a difference of the intermediate signal and output signal that is less than or equal to a predefined threshold, the number of iterations necessary to fulfill the exit criterion characterizes an information about how hard it is to determine an accurate enough output signal. This information may be used as an uncertainty measure, i.e., the more steps necessary the harder it is to determine an output signal for the input signal and the larger the uncertainty in the output signal.

In preferred embodiments, the deviation is predicted by a differentiable model and the intermediate signal is adapted based on a gradient of the deviation with respect to the intermediate signal.

This approach may be understood as gradient descent on the deviation with respect to the intermediate signal, i.e., optimizing the intermediate signal.

Irrespective of the type of model, the intermediate signal may also be adapted according to other optimization methods, especially black-box optimization methods such as evolutionary algorithms. For optimization, the deviation is used as objective value and the intermediate representation is used as variable to be optimized.

In preferred embodiments, it is also possible that the second machine learning system is a neural network and an output of a hidden layer of the second machine learning system is used as additional input to the third machine learning system for determining the deviation.

This may be understood as providing an additional input to the second machine learning system, namely an output of a layer of the second machine learning system. The inventors found that this improves the accuracy of the output signal even further.

In another aspect, the invention concerns a computer-implemented method for training a fourth machine learning system configured according to the specifications above, wherein training comprises the steps of:
f. Training the second machine learning model of the fourth machine learning model or the first machine learning model and the second machine learning model of the fourth machine learning model to determine a desired output signal for a provided first training input signal;
g. After training the second machine learning model or after training the first machine learning model and the second machine learning model, training the third machine learning model to determine a deviation of an intermediate signal determined from the first machine learning model and the second machine learning model for a provided second training input signal to a desired output signal for the supplied second training input signal, wherein the first machine learning model and the second machine learning model is not trained.

The method may be understood as enabling the method for determining the output as specified above. The training procedure can be understood as a two stage approach. First, the fourth machine learning system is trained to be able to predict intermediate signals. Second, the fourth machine learning system is trained to correct intermediate signals. It is possible that a pretrained machine learning system is used as first machine learning system and that the first machine learning system is not trained during the training procedure. Preferably, the first machine learning system and second machine learning system are both trained during the first stage (step f.) of the training procedure as the inventors found that this leads to an improvement in accuracy of the output signal later during inference (i.e., when executing the method for determining the output signal from above).

Training of the first stage may be understood as supervised training of the first machine learning system and/or the second machine learning system. In supervised training input signals are used for training, i.e., training input signals, wherein for each training input signal a desired output signal is supplied.

During the second stage (step g.) the parameters of the first machine learning system and the second machine learning system may preferably be frozen and only the parameters of the third machine learning system may be optimized. The training data of the third machine learning system may be understood as the intermediate signals predicted from the training input signals in combination with a respective deviation of an intermediate signal to a desired output signal. In other words, in order to train the third machine learning system, a training input signal is forwarded through the first machine learning model and the resulting feature representation is then forwarded through the second model in order to determine an intermediate output. The determined feature representation and the intermediate signal are then used as training input for the third machine learning system. As desired deviation to be predicted from the third machine learning system, a deviation between the intermediate signal and the desired output signal for the training input signal can be determined. The third machine learning system may then be trained in a supervised fashion using the feature representation determined for the training input signal and the intermediate signal determined for the training input signal as independent variable for training the third machine learning system and the desired deviation as the dependent variable for training the third machine learning system.

If the first machine learning system or the second machine learning system are neural networks, they may preferably be trained using a gradient descent algorithm in step f. Likewise, if the third machine learning system is a neural network, it may preferably be trained using a gradient descent algorithm in step g.

As detailed earlier in this description, the desired deviation may also characterize a binary variable indicating whether the distance between the intermediate signal and the desired output signal is equal to or a below a predefined threshold or not.

Embodiments of the invention will be discussed with reference to the following figures in more detail. The figures show:
- Figure 1: a machine learning system;
- Figure 2: a control system comprising a machine learning system controlling an actuator in its environment;
- Figure 3: the control system controlling an at least partially autonomous robot;
- Figure 4: the control system controlling a manufacturing machine;
- Figure 5: the control system controlling an automated personal assistant;
- Figure 6: the control system controlling a medical analysis system;
- Figure 7: the control system controlling a valve;
- Figure 8: a training system for training the machine learning system.

### Description of the embodiments

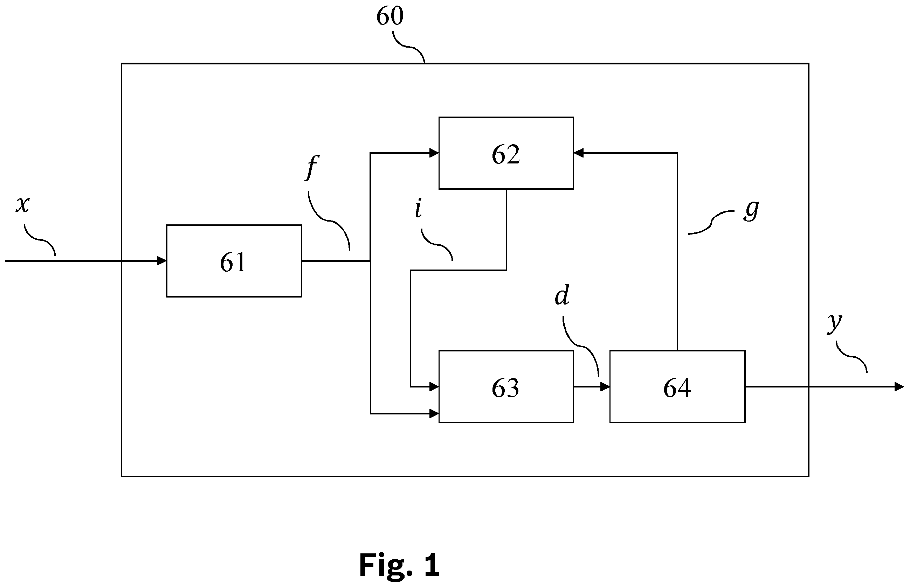

Figure 1 shows an embodiment of a machine learning system (60), wherein the machine learning (60) is configured to determine an output signal (y) for an input signal (x), wherein the output signal (y) characterizes a classification and/or a regression result.

The input signal (x) is provided to a first machine learning system (61), wherein the first machine learning system (61) is part of the machine learning system (60). In the embodiment, the first machine learning system (61) is a neural network. In further embodiments, other machine learning systems such as support vector machines or random forests are possible as first machine learning system (61) as well. The first machine learning system (61) determines a feature representation (*f*) of the input signal (x). Preferably, the feature representation (*f*) is in the form of a vector.

The feature representation (*f*) is then provided to a second machine learning system (62) of the machine learning system (60). The second machine learning system (62) is preferably a neural network. The second machine learning system (62) is configured to determine an intermediate signal (i) based on the feature representation (*f*). The intermediate signal (i) characterizes a classification and/or a regression result obtained for the feature representation (*f*). Hence, the intermediate signal (i) can be understood as characterizing a classification and/or regression result for the input signal (x). For example, the intermediate signal (i) may characterize probabilities for a plurality of classes obtained after a softmax operation of the second machine learning system (62).

The intermediate signal (*i*) and the feature representation (*f*) are used as input of a third machine learning system (63) that is part of the machine learning system (60). The third machine learning system (63) is configured to predict a deviation (*d*) between the intermediate signal (*i*) and a desired output signal of the input signal (*x*). In the depicted embodiment, the deviation (d) preferably characterizes whether the intermediate signal (*i*)

The predicted deviation (*d*) is then forwarded to a decision unit (64) of the machine learning system (60). The decision unit (64) decides based on the predicted deviation (*d*) whether to adapt the signal or not. If the deviation (*d*) is less than or equal to a predefined threshold, the intermediate signal (*i*) is put out as output signal (*y*) of the machine learning system (60). Otherwise, the decision unit (64) in combination with the second machine learning system (62) determines an adapted signal. In the depicted embodiment, a gradient (*g*) of the deviation with respect to the intermediate signal (*i*) is determined and the adapted signal is then determined based a gradient descent of the deviation (*d*). If the intermediate signal (*i*) is the result of a softmax operation, the gradient may preferably be determined with respect to an input of the softmax operation (i.e., the logits) and the adapted signal may then be determined by adapting the logits according to a negative direction of the gradient and passing the resulting signal through the softmax operation. In further embodiments (not shown), other optimization methods may be used to determine the adapted signal, wherein the deviation is used as objective value. The other optimization methods may, for example, be evolutionary algorithms. In any case, the adapted signal is then provided as intermediate signal (*i*) to the third machine learning system (63) to again determine a deviation (*d*).

This procedure of determining the deviation (*d*) and adapting the intermediate signal (*i*) based on the deviation (*d*) is repeated for a predefined amount of iterations or until the deviation (*d*) is less than or equal to the predefined threshold. In further embodiments, other exit criteria may be applied, e.g., exiting after a predefined energy budget has been consumed by the computer running the machine learning system (60). In any case, after the exit criterion is fulfilled, the intermediate signal (*i*) is provided as output signal (*y*) of the machine learning system (60).

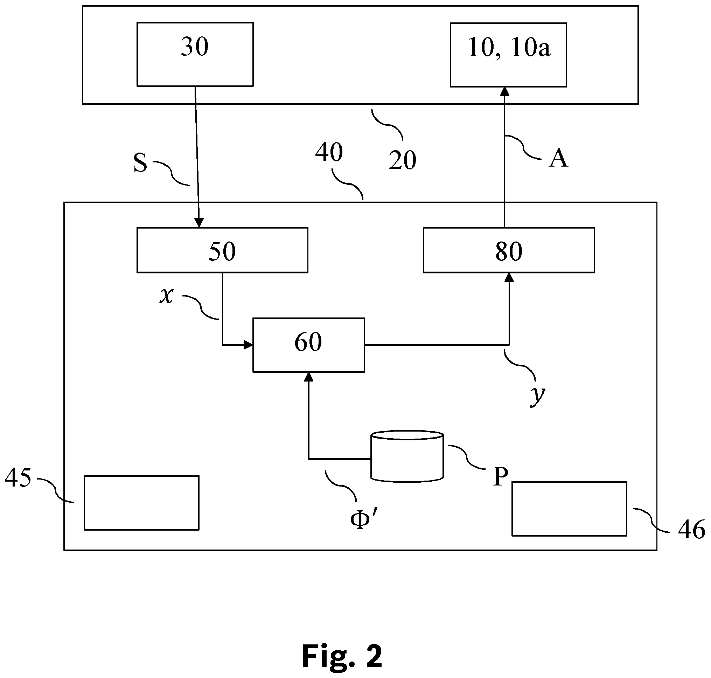

Figure 2 shows an embodiment of an actuator (10) in its environment (20), wherein the actuator (10) is controlled based on an output signal (*y*) of the machine learning system (60). The actuator (10) interacts with a control system (40). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals (*x*). Alternatively, in case of no receiving unit (50), each sensor signal (S) may directly be taken as an input signal (*x*). The input signal (*x*) may, for example, be given as an excerpt from the sensor signal (S). Alternatively, the sensor signal (S) may be processed to yield the input signal *(x).* In other words, the input signal (*x*) is provided in accordance with the sensor signal (S).

The input signal (*x*) is then passed on to the machine learning system (60).

The machine learning system (60) is parametrized by parameters (Φ), which are stored in and provided by a parameter storage (*St*₁).

The machine learning system (60) determines an output signal (*y*) from the input signals (*x*). The output signal (*y*) characterizes a classification and/or a regression result of the input signal (*x*). The output signal (*y*) is transmitted to an optional conversion unit (80), which converts the output signal (*y*) into the control signals (A). The control signals (A) are then transmitted to the actuator (10) for controlling the actuator (10) accordingly. Alternatively, the output signal (*y*) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

It is also possible that the machine learning system (60) of the control system (40) is configured to perform regression analysis. In this case, the output signal (y) predicted from the machine learning system (60) comprises continuous values, which are then forwarded to the optional conversion unit (80).

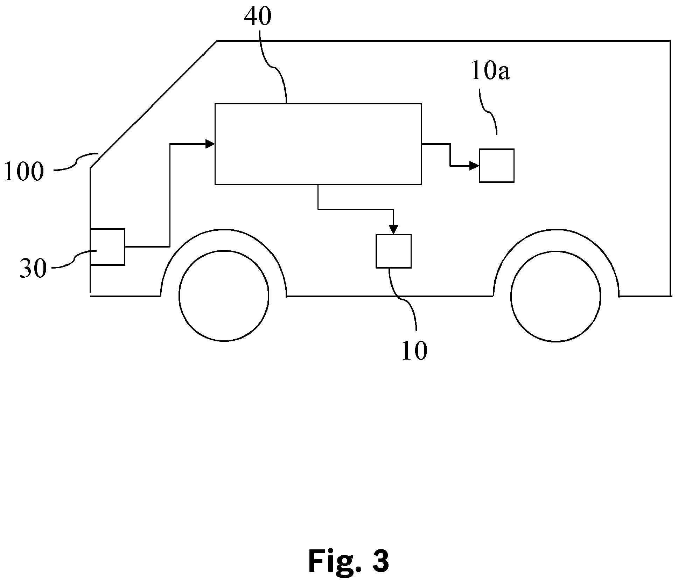

Figure 3 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The input signal (*x*) may hence be understood as an input image and the machine learning system (60) as an image classifier.

The image classifier (60) may be configured to detect objects in the vicinity of the at least partially autonomous robot based on the input image (*x*). The output signal (*y*) may comprise information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the image classifier (60) deems them most likely to be, e.g., pedestrians or trees, and the control signal (A) may be determined depending on the classification. For example, the actuator (10) may be a break and the control signal (A) may be chosen such that the vehicle (100) breaks if the vehicle (100) is closer to a detected object than a predefined threshold.

Alternatively or additionally, the control signal (A) may also be used to control the display (10a), e.g., for displaying the objects detected by the image classifier (60). It can also be imagined that the control signal (A) may control the display (10a) such that it produces a warning signal, if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

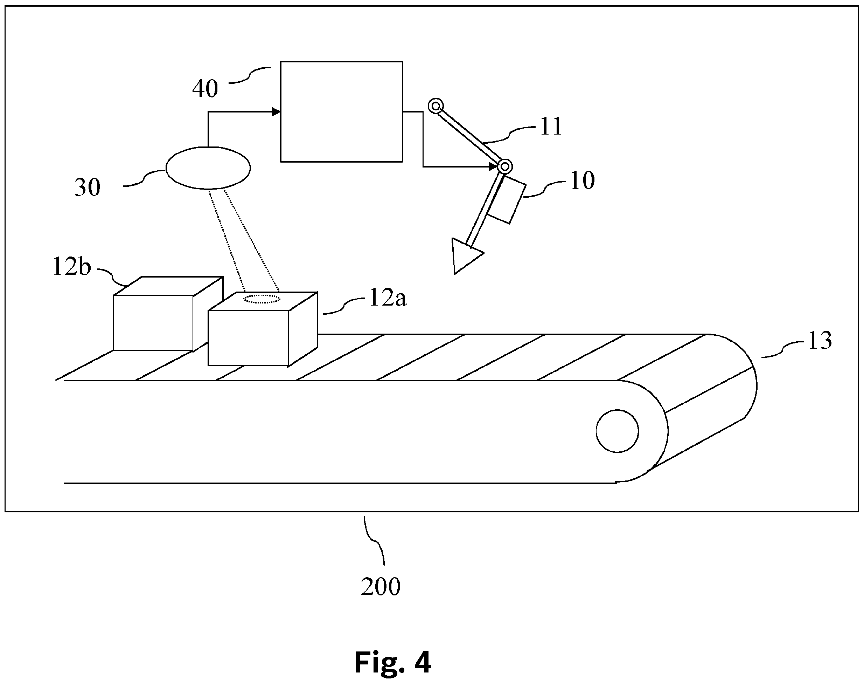

Shown in figure 4 is an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11). The actuator (10) may, for example, be an electric or hydraulic drive that opens or closes a gripper.

The sensor (30) may be given by an optical sensor which captures properties of, e.g., a manufactured product (12). The machine learning system (60) may hence be understood as an image classifier.

The image classifier (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the image classifier (60) classifies, whether the manufactured product is broken or exhibits a defect. The actuator (10) may then be controlled as to remove the manufactured product from the transportation device.

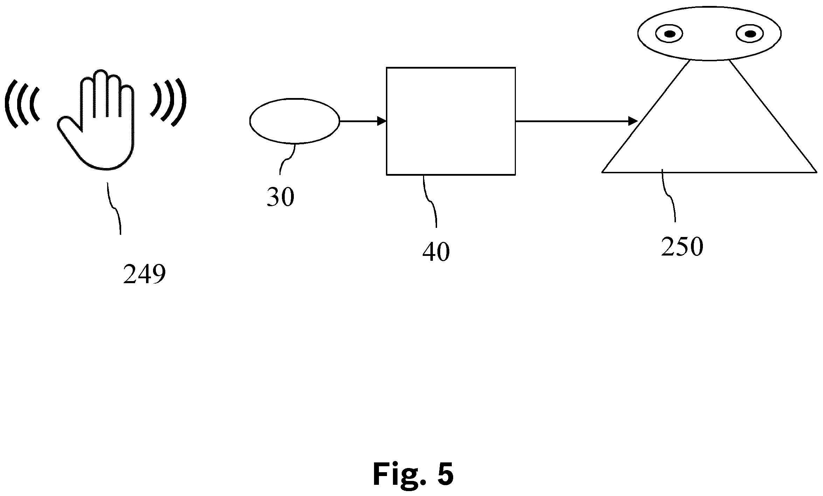

Shown in figure 5 is an embodiment in which the control system (40) is used for controlling an automated personal assistant (250). The sensor (30) may be an optic sensor, e.g., for receiving video images of a gestures of a user (249). Alternatively, the sensor (30) may also be an audio sensor, e.g., for receiving a voice command of the user (249).

The control system (40) then determines control signals (A) for controlling the automated personal assistant (250). The control signals (A) are determined in accordance with the sensor signal (S) of the sensor (30). The sensor signal (S) is transmitted to the control system (40). For example, the machine learning system (60) may be configured to, e.g., carry out a gesture recognition algorithm to identify a gesture made by the user (249). The control system (40) may then determine a control signal (A) for transmission to the automated personal assistant (250). It then transmits the control signal (A) to the automated personal assistant (250). Alternatively, the machine learning system (60) may be configured for audio classification to classify a voice command uttered by the user (249)

For example, the control signal (A) may be determined in accordance with the identified user gesture or the identified voice command recognized by the machine learning system (60). It may comprise information that causes the automated personal assistant (250) to retrieve information from a database and output this retrieved information in a form suitable for reception by the user (249). In further embodiments, it may be envisioned that instead of the automated personal assistant (250), the control system (40) controls a domestic appliance (not shown) controlled in accordance with the identified user gesture. The domestic appliance may be a washing machine, a stove, an oven, a microwave or a dishwasher.

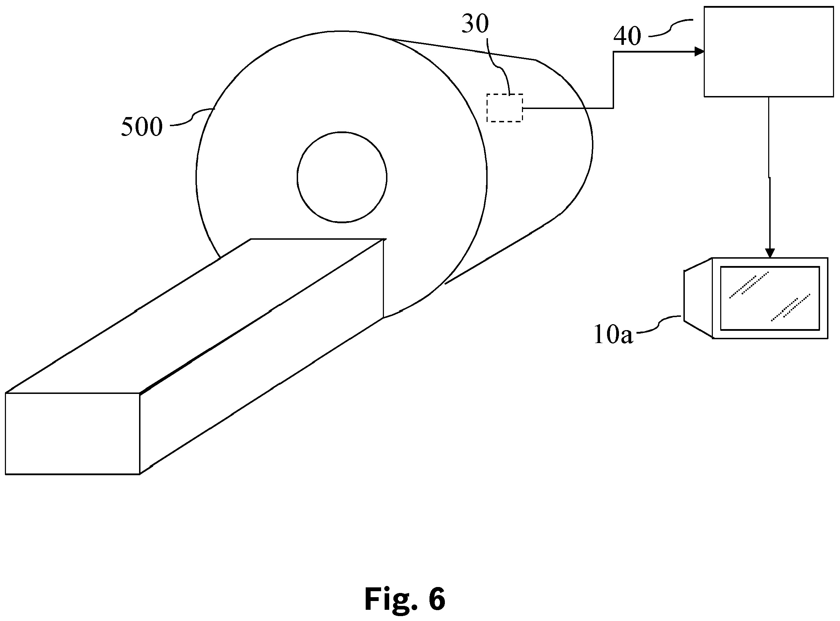

Shown in figure 6 is an embodiment of a medical imaging system (500) controlled by the control system (40). The imaging system may, for example, be an MRI apparatus, x-ray imaging apparatus or ultrasonic imaging apparatus. The sensor (30) may, for example, be an imaging sensor which takes at least one image of a patient, e.g., displaying different types of body tissue of the patient.

The machine learning system (60) may then determine a classification of at least a part of the sensed image. The at least part of the image is hence used as input image (x) to the machine learning system (60). The machine learning system (60) may hence be understood as an image classifier.

The control signal (A) may then be chosen in accordance with the classification, thereby controlling a display (10a). For example, the image classifier (60) may be configured to detect different types of tissue in the sensed image, e.g., by classifying the tissue displayed in the image into either malignant or benign tissue. This may be done by means of a semantic segmentation of the input image (x) by the image classifier (60). The control signal (A) may then be determined to cause the display (10a) to display different tissues, e.g., by displaying the input image (x) and coloring different regions of identical tissue types in a same color.

In further embodiments (not shown) the imaging system (500) may be used for non-medical purposes, e.g., to determine material properties of a workpiece. In these embodiments, the image classifier (60) may be configured to receive an input image (*x*) of at least a part of the workpiece and perform a semantic segmentation of the input image (*x*), thereby classifying the material properties of the workpiece. The control signal (A) may then be determined to cause the display (10a) to display the input image (*x*) as well as information about the detected material properties.

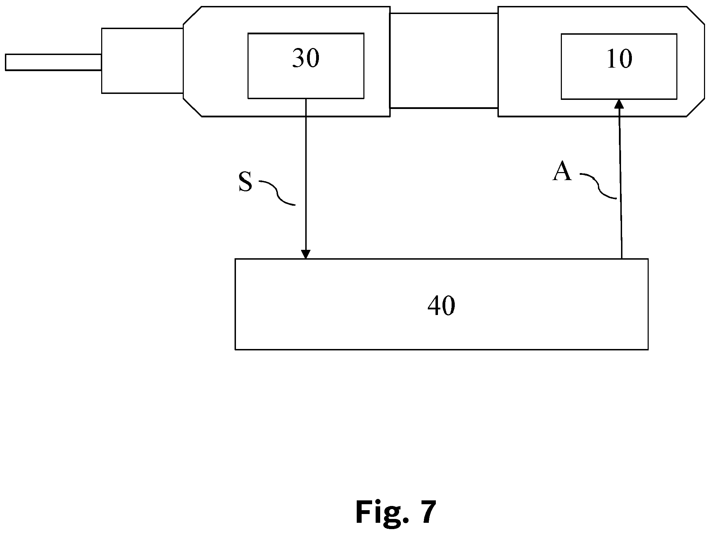

Figure 7 shows an embodiment of the control system (40) for controlling a valve (10). In the embodiment, the sensor (30) is a pressure sensor that senses a pressure of a fluid that can be output by the valve (10). In particular, the machine learning system (60) may be configured to determine an injection amount of fluid dispensed by the valve (10) based on a time series (x) of pressure values.

In particular, the valve (10) may be part of a fuel injector of an internal combustion engine, wherein the valve (10) is configured to inject the fuel into the internal combustion engine. Based on the determined injection quantity, the valve (10) can then be controlled in future injection processes in such a way that an excessively large quantity of injected fuel or an excessively small quantity of injected fuel is compensated for accordingly.

Alternatively, it is also possible that the valve (10) is part of an agricultural fertilizer system, wherein the valve (10) is configured to spray a fertilizer. Based on the determined amount of fertilizer sprayed, the valve (10) can then be controlled in future spraying operations in such a way that an excessive amount of fertilizer sprayed or an insufficient amount of fertilizer sprayed is compensated for accordingly.

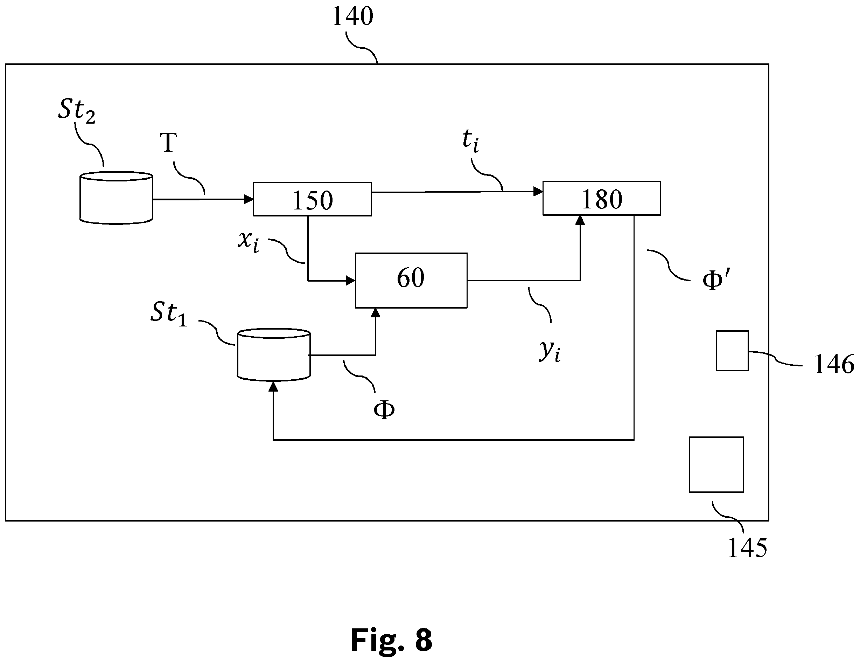

Figure 8 shows an embodiment of a training system (140) for training the machine learning system (60) of the control system (40) by means of a training data set (T). The training data set (T) comprises a plurality of input signals (*xᵢ*) which are used for training the machine learning system (60), wherein the training data set (T) further comprises, for each input signal (*xᵢ*), a desired output signal (*tᵢ*) which corresponds to the input signal (*xᵢ*) and characterizes a classification and/or regression result of the input signal (*xᵢ*).

Training is conducted in two stages. In a first stage, a training data unit (150) accesses a computer-implemented database (St₂), the database (St₂) providing the training data set (T). The training data unit (150) determines from the training data set (T) preferably randomly at least one input signal (*xᵢ*) and the desired output signal (*tᵢ*) corresponding to the input signal (*xᵢ*) and transmits the input signal (*xᵢ*) to the machine learning system (60). The machine learning system (60) determines an intermediate signal (*yᵢ*) based on the input signal (*xᵢ*).

The desired output signal (*tᵢ*) and the determined intermediate signal (*yᵢ*) are transmitted to a modification unit (180).

Based on the desired output signal (*tᵢ*) and the determined intermediate signal (*yᵢ*), the modification unit (180) then determines new parameters (Φ') for the machine learning system (60). Specifically, the new parameters (Φ') are determined for the second machine learning system (62). In further embodiments, the new parameters (Φ') may also comprise new parameters (Φ') of the first machine learning system (61). For determining the new parameters (Φ'), the modification unit (180) compares the desired output signal (*tᵢ*) and the determined intermediate signal (*yᵢ*) using a loss function. The loss function determines a first loss value that characterizes how far the determined intermediate signal (*yᵢ*) differs from the desired output signal (*tᵢ*). In the given embodiment, a negative log-likehood function is used as the loss function. Other loss functions are also conceivable in alternative embodiments.

Furthermore, it is possible that the determined intermediate signal (*yᵢ*) and the desired output signal (*tᵢ*) each comprise a plurality of sub-signals, for example in the form of tensors, wherein a sub-signal of the desired output signal (*tᵢ*) corresponds to a sub-signal of the determined intermediate signal (*yᵢ*). It is possible, for example, that the machine learning system (60) is configured for object detection and a first sub-signal characterizes a probability of occurrence of an object with respect to a part of the input signal (*xᵢ*) and a second sub-signal characterizes the exact position of the object. If the determined intermediate signal (*yᵢ*) and the desired output signal (*tᵢ*) comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters (Φ') based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the first stage of training is repeated iteratively for a predefined number of iteration steps or repeated iteratively until the first loss value falls below a predefined threshold value. Alternatively or additionally, it is also possible that the first stage of training is terminated when an average first loss value with respect to a test or validation data set falls below a predefined threshold value. In at least one of the iterations the new parameters (Φ') determined in a previous iteration are used as parameters (Φ) of the machine learning system (60), in particular as parameters of the second machine learning system (62) or the first machine learning system (61) and the second machine learning system (62).

In a second stage of training, the new parameters (Φ') of the third machine learning system (63) are determined. For this, an input signal (*xᵢ*) and a desired output signal (*tᵢ*) are determined from the dataset (T) as in the first stage of training. A feature representation (f) is determined for the input signal (*xᵢ*) from the first machine learning system (61) and an intermediate signal (*yᵢ*) is determined from the second machine learning system (62). The feature representation (*f*) and intermediate representation (*yᵢ*) are used as input for the third machine learning system (63). Additionally, the output of a hidden layer of the second machine learning system (62) may be used as input of the third machine learning system (63).

Based on the provided input, the third machine learning system (63) is trained in the second stage to predict a deviation of the determined intermediate signal (*yᵢ*) to the desired output signal (*tᵢ*). The deviation may, for example, be characterized by a metric (e.g., Euclidean distance) or a semimetric (e.g., cosine distance). The deviation is determined by the modification unit (180) and subsequently used in the modification unit (180) in order to determine a gradient of the deviation with respect to the parameters of the third machine learning system (63). Based on this gradient, the modification unit (180) determines new parameters (Φ') of the third machine learning system. As the first stage, the second stage may be repeated iteratively for a predefined number of iteration steps or repeated iteratively until the deviation falls below a predefined threshold value. Alternatively or additionally, it is also possible that the second stage of training is terminated when an average deviation with respect to a test or validation data set falls below a predefined threshold. In at least one of the iterations the new parameters (Φ') determined in a previous iteration are used as parameters (Φ) of the machine learning system (60), in particular as parameters of the third machine learning system (63).

Furthermore, the training system (140) may comprise at least one processor (145) and at least one machine-readable storage medium (146) containing instructions which, when executed by the processor (145), cause the training system (140) to execute a training method according to one of the aspects of the invention.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises *N* elements, wherein *N* is the number of elements in the plurality, the elements are assigned the integers from 1 to *N.* It is also understood that elements of the plurality can be accessed by their index.

## Claims

1. Computer-implemented method for determining an output signal characterizing a classification and/or a regression result of an input signal comprising the steps of:
a. Determining a feature representation characterizing the input signal;
b. Determining an intermediate signal characterizing a classification and/or regression result of the feature representation;
c. Predicting, based on the feature representation and the intermediate signal, a deviation of the intermediate signal from a desired output signal of the input signal;
d. Adapting the intermediate signal according to the determined deviation thereby determining an adapted signal;
e. Providing the adapted signal as output signal.

2. Method according to claim 1, wherein the steps c. and d. are repeated iteratively until an exit criterion is fulfilled, wherein the adapted signal is used as intermediate signal in a next iteration.

3. Method according to claim 1 or 2, wherein the deviation is predicted by a differentiable model and the intermediate signal is adapted based on a gradient of the deviation with respect to the intermediate signal.

4. Method according to any one of the claims 1 to 3, wherein the feature representation is determined by a first machine learning system using the input signal as input of the first machine learning system and/or wherein the intermediate signal is determined by a second machine learning system using the feature representation as input of the second machine learning system and/or wherein the deviation is determined by a third machine learning system using the feature representation and the intermediate signal as input of the third machine learning system.

5. Method according to claim 4, wherein the first machine learning system, second machine learning system and third machine learning system are parts of a fourth machine learning system.

6. Method according to claim 4 or 5, wherein the second machine learning system is a neural network and an output of a hidden layer of the second machine learning system is used as additional input to the third machine learning system for determining the deviation.

7. Computer-implemented method for training a fourth machine learning system configured according to claim 5 or 6, wherein training comprises the steps of:
f. Training the second machine learning model or the first machine learning model and the second machine learning model to determine a desired output signal for a provided first training input signal;
g. After training the second machine learning model or after training the first machine learning model and the second machine learning model, training the third machine learning model to determine a deviation of an intermediate signal determined from the first machine learning model and the second machine learning model for a provided second training input signal to a desired output signal for the supplied second training input signal, wherein the first machine learning model and the second machine learning model is not trained.

8. Method according to any one of the claims 1 to 7, wherein an input signal comprises a sensor signal.

9. Method according to any one of the claims 1 to 6, wherein a robot is controlled based on the output signal.

10. Machine learning system configured according to the fourth machine learning system of claim 5 or 6.

11. Training system (140), which is configured to carry out the training method according to claim 7.

12. Computer program that is configured to cause a computer to carry out the method according to any one of the claims 1 to 9 if the computer program is carried out by a processor (45, 145).

13. Machine-readable storage medium (46, 146) on which the computer program according to claim 12 is stored.
